# FASCICULE DE BREVET EUROPEEN

(11) **EP 2 256 330 B1**
(45) Date de publication et mention de la délivrance du brevet: **19.09.2012**
(21) Numéro de dépôt: 10161869.2
(22) Date de dépôt: 04.05.2010
(51) Int. Cl.: F02M 35/12, F02M 35/10

(54) **Dispositif d'atténuation acoustique pour ligne d'admission d'un moteur thermique, et ligne d'admission l'incorporant.**
Ansauggeräuschdämpfer einer Brennkraftmaschine, sowie diesen umfassende Ansaugleitung
Intake noise damper of an internal combustion engine, and intake conduit comprising same

(30) Priorité: 18.05.2009 FR 0902400
(43) Date de publication de la demande: 01.12.2010
(73) Titulaire: HUTCHINSON, 75008 Paris (FR)
(72) Inventeur: Caliskan, Alper, 45140 St Jean de la Ruelle (FR)
(74) Mandataire: Bolinches, Michel Jean-Marie

(56) Documents cités:
- EP-A- 2 128 425
- DE-A1- 19 956 172
- DE-A1- 19 957 597
- DE-A1-102004 049 446
- DE-A1-102006 038 830
- DE-C1- 19 960 427
- JP-A- 59 141 707

## Description

La présente invention concerne un dispositif d'atténuation acoustique en particulier pour une ligne d'admission d'un moteur thermique à combustion interne, tel qu'un moteur turbocompressé pour véhicule automobile, et une telle ligne d'admission l'incorporant.

De manière connue, les dispositifs d'atténuation acoustique pour ligne d'admission d'un moteur turbocompressé de véhicule automobile peuvent comporter une enveloppe tubulaire radialement externe qui est destinée à être parcourue par un fluide gazeux sous pression, et avec les portions d'extrémités de laquelle est solidarisée (typiquement par soudage) une structure de conduite radialement interne formant au moins deux chambres annulaires de résonance avec l'enveloppe.

On peut par exemple citer le document DE-A1-199 56 172 pour la description d'un tel dispositif, dans lequel :
- deux renflements de l'enveloppe sont reliés entre eux par un rétrécissement radial périphérique contre lequel est monté un tronçon médian de la structure de conduite interne, ou bien
- deux demi-coques formant l'enveloppe sont soudées entre elles de part et d'autre d'une collerette radiale formée sur ce tronçon médian.

Un inconvénient majeur de ces dispositifs d'atténuation connus réside notamment dans la nécessité de choisir des sous-plages d'atténuation acoustique à l'intérieur de la plage d'atténuation de fréquences (cette plage s'étend typiquement de 1,5 kHz à 3,5 kHz) pour laquelle on souhaite obtenir une atténuation d'au moins 20 dB, et dans la possibilité d'avoir des creux indésirables d'atténuation, qui se traduisent par le fait que l'on atténue beaucoup moins de 20 dB (rappelons que l'atténuation acoustique est définie comme étant égale à 10 x log₁₀ [W_{incidente} / Wₜᵣₐₙₛₘᵢₛₑ], où W_{incidente} et Wₜᵣₐₙₛₘᵢₛₑ représentent respectivement les énergies acoustiques des ondes incidentes et des ondes transmises).

D'autres inconvénients des dispositifs d'atténuation présentés dans ce document résident dans les vibrations du tronçon médian à l'intérieur de l'enveloppe qui sont générées en fonctionnement et dans les fuites acoustiques associées, qui pénalisent la qualité de l'atténuation obtenue.

Le document US-A-4 874 062 présente un résonateur acoustique comportant une enveloppe externe en résine moulée faite de deux parties formant entrée et sortie pour le fluide qui sont soudées entre elles, et une structure de conduite interne élastomère qui présente une collerette bloquée par la soudure entre les deux parties d'enveloppe et qui définit deux chambres de résonance avec l'enveloppe via un système d'orifices et de tubes auxiliaires de résonance.

Un inconvénient majeur du résonateur décrit dans ce dernier document réside dans la complexité de sa structure de conduite interne.

Le document DE-C1-199 60 427 décrit un dispositif d'atténuation acoustique constitué d'un tuyau élastomère. Ce tuyau est formé d'un seul tenant en caoutchouc.

Un but de la présente invention est de proposer un dispositif d'atténuation acoustique pour une ligne d'admission d'un moteur thermique à combustion interne, tel qu'un moteur turbocompressé pour véhicule automobile, qui remédie aux inconvénients précités, ce dispositif étant destiné à être parcouru par un fluide gazeux sous pression et comportant :
- une enveloppe tubulaire radialement extérieure comportant deux embouts d'entrée et de sortie pour le fluide qui se terminent respectivement par deux élargissements périphériques soudés l'un sur l'autre en formant un renflement circonférentiel pour le dispositif, et
- une structure de conduite radialement interne à l'enveloppe comportant un conduit qui est monté axialement entre ces deux élargissements et qui délimite avec l'enveloppe au moins deux chambres annulaires de résonance par l'intermédiaire d'au moins une collerette radiale s'étendant à partir du conduit.

A cet effet, ce dispositif de l'invention est tel que le conduit est monté en butée axiale à l'intérieur de l'enveloppe en venant buter contre un épaulement interne de l'un au moins des embouts, épaulement à partir duquel s'étend ledit élargissement, le ou chaque épaulement étant conçu pour caler axialement une extrémité correspondante du conduit de sorte à minimiser en fonctionnement les vibrations de ce dernier contre l'enveloppe.

On notera que ce soudage des deux embouts formant l'enveloppe combiné à l'immobilisation axiale du conduit interne permet d'éviter toute fuite ou dispersion acoustique en fonctionnement et d'atténuer de manière satisfaisante l'ensemble des fréquences d'excitation sur toute la plage comprise entre 1,5 kHz et 3,5 kHz avec une atténuation acoustique obtenue d'au moins 20 dB sur cette plage.

Selon une autre caractéristique de l'invention, l'intérieur du conduit peut communiquer directement avec chacune desdites chambres de résonance par des évidements qui sont formés dans ce conduit de part et d'autre de ladite ou de chaque collerette et qui sont par exemple des fentes et/ou lumières en arc de cercle (ou en variante des orifices circulaires, oblongs ou autres).

Avantageusement, ladite ou chaque collerette peut être formée d'un seul tenant avec le conduit et montée au contact (ou quasiment au contact) dudit renflement de l'enveloppe sans en être solidaire, de telle sorte que ce conduit soit mobile en rotation à l'intérieur de cette enveloppe pour y être positionné angulairement.

Selon une autre caractéristique préférentielle de l'invention, le conduit peut avoir ses deux extrémités qui sont respectivement montées en butée dans les deux épaulements des embouts, ce dispositif étant alors avantageusement constitué de trois pièces séparées respectivement formées par ce conduit et ces embouts.

En variante, le conduit peut avoir l'une de ses extrémités solidaire de l'un des embouts par exemple par soudage, et son autre extrémité montée en butée axiale contre l'épaulement de l'autre embout, ce dispositif étant alors avantageusement constitué de deux pièces séparées respectivement formées par ces embouts.

On notera que l'utilisation de trois pièces au lieu de deux présente l'avantage de ne pas polluer l'espace intérieur au conduit par des copeaux générés par le soudage de ce conduit à l'embout concerné, ces copeaux étant en outre susceptibles d'obturer partiellement voire de boucher les orifices ou lumières du conduit débouchant sur la chambre de résonance en regard.

Selon une autre caractéristique de l'invention, le conduit et les embouts peuvent être réalisés en au moins une matière plastique, de préférence en un matériau thermoplastique rigide moulé par injection, étant précisé que ce conduit et/ou ces embouts peuvent en variante être réalisés en un composite. Quant à l'opération de soudage des élargissements respectifs des embouts entre eux, elle peut être alors mise en oeuvre par friction circulaire (i.e. par rotation), avec comme résultat une absence de fuite acoustique par l'enveloppe.

Avantageusement, cette interface de soudure par friction peut être localisée en une extrémité dudit renflement qui définit une zone radialement la plus externe pour le dispositif et qui est axialement décalée par rapport à ladite ou chaque collerette.

Egalement avantageusement et en référence au montage préférentiel précité des deux extrémités du conduit en butée axiale dans l'enveloppe, un dispositif d'atténuation selon l'invention est dépourvu de toute soudure entre la structure de conduite et cette enveloppe.

Selon une autre caractéristique préférentielle de l'invention, l'un des embouts a son élargissement en forme de bride dont la face axialement interne se termine par un bord convergeant radialement vers l'intérieur, l'autre embout ayant son élargissement en forme de manchon dont un rebord axialement interne diverge radialement vers l'extérieur et est soudé sur ce bord. De préférence, l'interface de soudure est sensiblement tronconique en convergeant radialement et axialement vers l'intérieur de l'enveloppe, et l'épaisseur radiale du rebord d'embout décroît à mesure que ce rebord diverge pour l'obtention d'une étanchéité acoustique optimale.

Selon un premier mode de réalisation de l'invention, une unique collerette est formée sur le conduit, cette collerette étant reliée à deux portions cylindriques du conduit définissant lesdites chambres par ses deux faces opposées, des pattes axiales reliant une face de la collerette à l'une de ces portions et assurant entre elles la communication de cette portion avec la chambre en regard, l'autre portion s'étendant continûment à partir de la face opposée de la collerette en présentant des fentes, orifices circulaires et/ou lumières en arc de cercle assurant la communication avec l'autre chambre.

Selon un second mode de réalisation de l'invention, au moins deux collerettes sont formées coaxialement sur le conduit, au moins une portion cylindrique médiane qui s'étend entre ces collerettes présentant des évidements par exemple en forme de fentes, orifices circulaires et/ou lumières en arc de cercle assurant la communication avec la chambre en regard, ce conduit présentant deux portions d'extrémité s'étendant continûment à partir de ces collerettes et se terminant par des pattes axiales montées en butée contre lesdits épaulements des deux embouts.

Une ligne d'admission selon l'invention d'un moteur thermique à combustion interne, tel qu'un moteur turbocompressé pour véhicule automobile, comporte au moins un dispositif d'atténuation acoustique selon l'invention tel que défini ci-dessus.

D'autres avantages, caractéristiques et détails de l'invention ressortiront du complément de description qui va suivre en référence à des dessins annexés, donnés uniquement à titre d'exemples et dans lesquels :
la figure 1 est une vue en perspective éclatée d'un dispositif d'atténuation acoustique à deux chambres de résonance selon un exemple de réalisation de l'invention,
la figure 2 est une vue partiellement en perspective et en coupe axiale du dispositif d'atténuation de la figure 1 en position assemblée montrant en médaillon la soudure des deux embouts,
la figure 3 est une vue assemblée de dessus d'un autre dispositif d'atténuation selon l'invention correspondant à une première variante à deux chambres de résonance de celui des figures 1 et 2,
la figure 4 est une vue en coupe axiale, suivant le plan IV-IV de la figure 3, du dispositif selon cette première variante montrant les fentes/ lumières débouchant sur ces chambres,
la figure 5 est une vue en perspective éclatée du dispositif des figures 3 et 4,
la figure 6 est une vue assemblée de dessus d'un autre dispositif d'atténuation selon l'invention correspondant à une seconde variante à trois chambres de résonance de celui des figures 1 et 2,
la figure 7 est une vue en coupe axiale, suivant le plan VII-VII de la figure 6, du dispositif selon cette seconde variante montrant les fentes/ lumières débouchant sur ces chambres,
la figure 8 est une vue en coupe axiale du dispositif selon cette seconde variante suivant un autre plan de coupe,
la figure 9 est une vue en perspective du conduit interne que comporte le dispositif selon cette seconde variante, et
la figure 10 est une vue en perspective éclatée du dispositif selon ces figures 6 à 9.

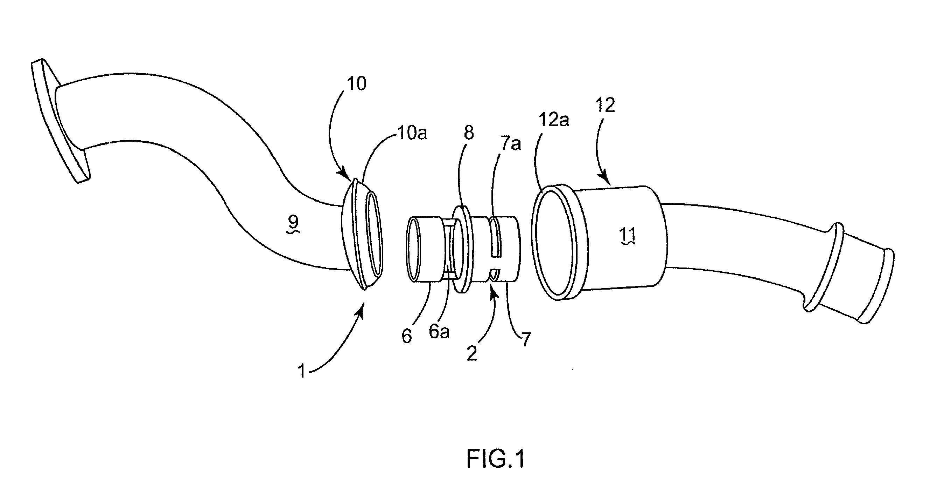

Chacun des dispositifs d'atténuation acoustique 1, 101, 201 illustrés aux figures 1 à 10 est avantageusement destiné à être intégré à une ligne d'admission d'un moteur turbocompressé de véhicule automobile en étant parcouru par de l'air sous pression.

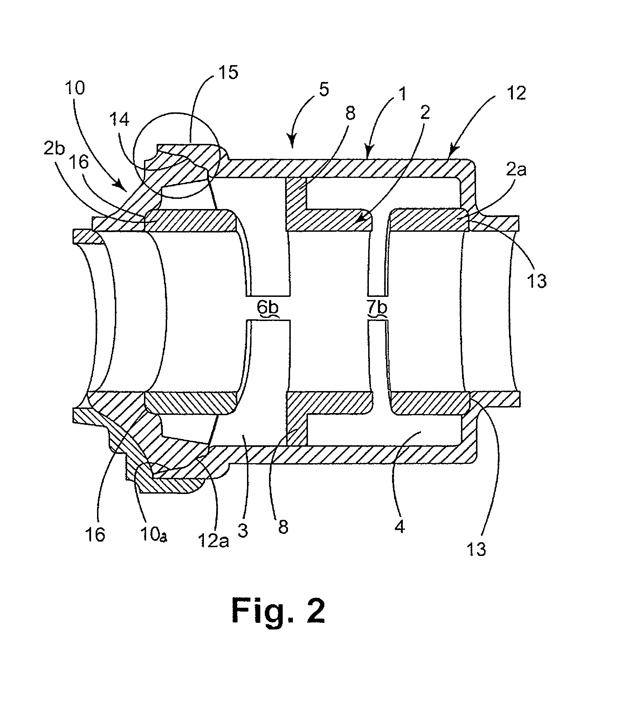

Le dispositif d'atténuation selon l'exemple des figures 1 et 2 est constitué de trois pièces distinctes, comprenant :
- un conduit 2 radialement interne qui est conçu pour former deux chambres annulaires de résonance 3 et 4 en liaison avec une enveloppe 5 radialement externe (voir figure 2) et qui comporte à cet effet deux portions cylindriques 6 et 7 séparées entre elles par une collerette radiale 8 et évidées d'une manière déterminée pour faire communiquer directement l'intérieur du conduit avec ces chambres 2 et 3,
- un embout 9 se terminant par une bride 10 évasée en son bord axialement interne 10a (dans le sens de l'assemblage) de sorte à former un premier élargissement, et
- un embout 11 se terminant par un manchon tubulaire 12 formant un second élargissement (sensiblement à la manière d'une cloche cylindrique) à rebord axialement interne 12a évasé définissant une protubérance radialement externe pour la manchon 12, lequel est destiné à être soudé par ce rebord 12a au bord 10a de l'embout 9 pour former finalement l'enveloppe 5.

On notera que les géométries coudées et/ou cintrées des embouts 9 et 11 axialement vers l'extérieur de la bride 10 et du manchon 12 pourraient varier dans une large mesure, sans sortir du cadre de l'invention.

Le conduit 2 et les embouts 9 et 11 sont avantageusement réalisés en une matière plastique ou composite, par exemple un polyamide et, comme illustré à la figure 2, on réalise l'assemblage du dispositif 1 :
- dans un premier temps, en introduisant le conduit 2 radialement à l'intérieur du manchon 12 de l'embout 11 de manière à mettre une extrémité axiale 2a du conduit 2 en butée contre un épaulement interne 13 de l'embout 11 formé à la base de son élargissement générant le manchon 12 ; puis
- dans un second temps, en soudant par friction circulaire le rebord 12a de l'embout 11 renfermant le conduit 2 radialement sur le bord 10a de l'embout 9, en une interface de soudure 14 globalement tronconique qui est localisée sur la face radialement externe de ce bord 10a (l'interface 14 est convergente pour l'embout 9 et divergente pour l'embout 11).

On voit à la figure 2 que cette soudure entre la bride 10 et le manchon 12 forme un renflement 15 pour l'enveloppe 5 délimitant les chambres 3 et 4, et que l'étanchéité acoustique procurée par cette soudure est réalisée asymétriquement sur ce renflement, de manière axialement décalée par rapport à la collerette 8 du conduit 2. De plus, il est à noter que c'est cette soudure à interface 14 globalement tronconique entre embouts 9 et 11 qui permet de mettre correctement en butée axiale l'autre extrémité axiale 2b du conduit 2 contre un autre épaulement interne 16 de l'embout 9 formé à la base de son élargissement générant la bride 10. De cette manière, on comprend que le conduit 2 est immobilisé axialement à l'intérieur de l'enveloppe 5 tout en étant mobile en rotation pour y être positionné angulairement.

Plus précisément, on voit que chacun de ces épaulements 13, 16 définit une portée radiale d'appui pour l'extrémité radiale correspondante 2a, 2b du conduit 2, lequel est ainsi calé de manière satisfaisante dans l'enveloppe 5 sans y être soudé, ce qui présente l'avantage de ne pas générer de pollution de l'espace interne au conduit 2 ni des évidements ménagés dans ce dernier pour déboucher sur les chambres 3 et 4. Ce calage axial du conduit 2 permet ainsi d'éviter sa vibration dans les conditions normales de fonctionnement.

Comme visible aux figures 1 et 2, ces évidements formés dans le conduit 2 comprennent, dans cet exemple de réalisation :
- deux lumières sensiblement hémicirculaires 6a formées sur la portion 6 en butée contre l'embout 9, ces lumières 6a étant séparées entre elles par deux pattes de liaison 6b diamétralement opposées, et
- deux fentes 7a également en forme de demi-cercles (de largeur axiale inférieure à celle des lumières 6a) formées sur la portion 7 en butée contre l'embout 11, ces fentes 7a étant reliées entre elles par des pattes 7b.

Pour la description suivante des deux variantes de dispositifs d'atténuation selon l'invention, on a utilisé des références numériques augmentées à chaque fois de 100 pour désigner des éléments présentant la même fonction, sinon la même structure.

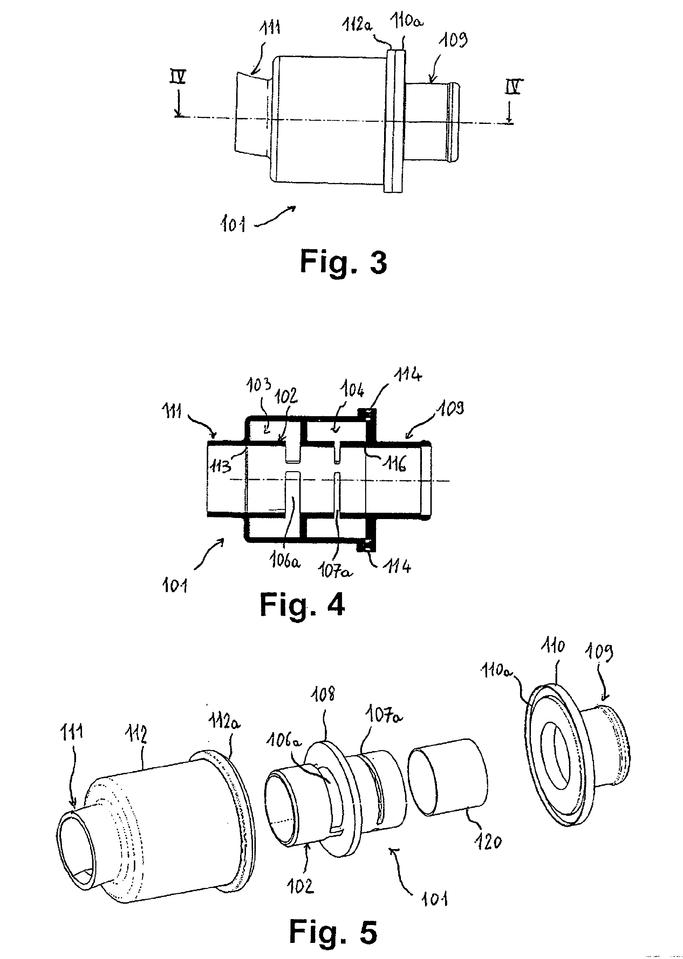

Le dispositif d'atténuation 101 selon la première variante illustrée aux figures 3 à 5 se distingue essentiellement de celui des figures 1 et 2 par la géométrie sensiblement droite de ses embouts 109 et 111 et par la présence d'une douille de raccordement 120 à insérer dans l'embout 109 en forme de bride. Comme décrit précédemment, on voit à la figure 4 que la soudure par friction circulaire réalisée à l'interface 114 entre le bord 110a de la bride 110 et le rebord 112a du manchon 112 assure le calage axial du conduit interne 102 monté en butée contre les épaulements internes 113 et 116 des embouts 109 et 111 (les lumières 106a et les fentes 107a définissant sur ce conduit 102 les chambres de résonance 103 et 104 de part et d'autre de la collerette 108).

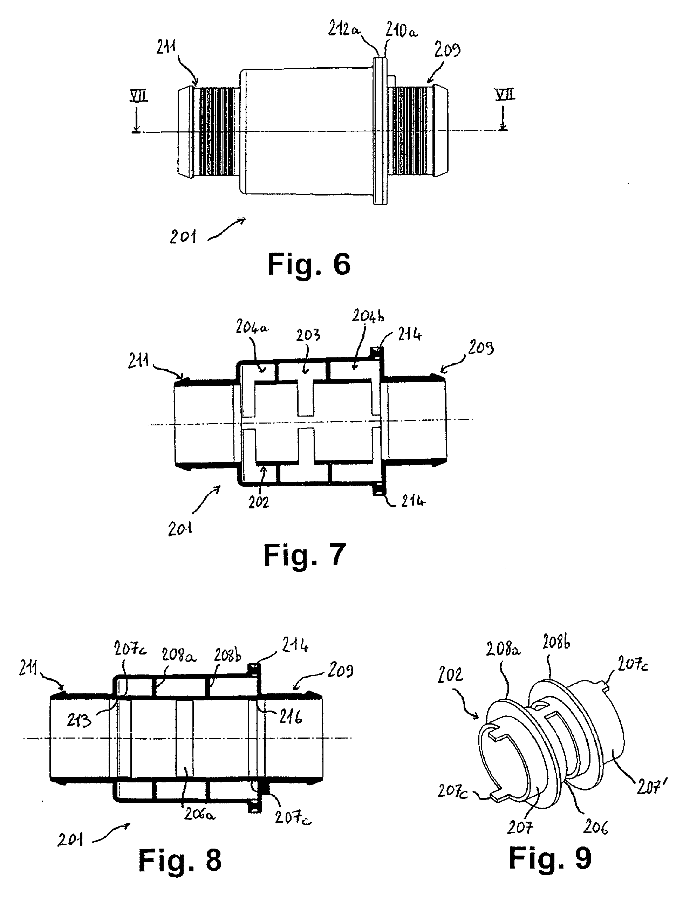

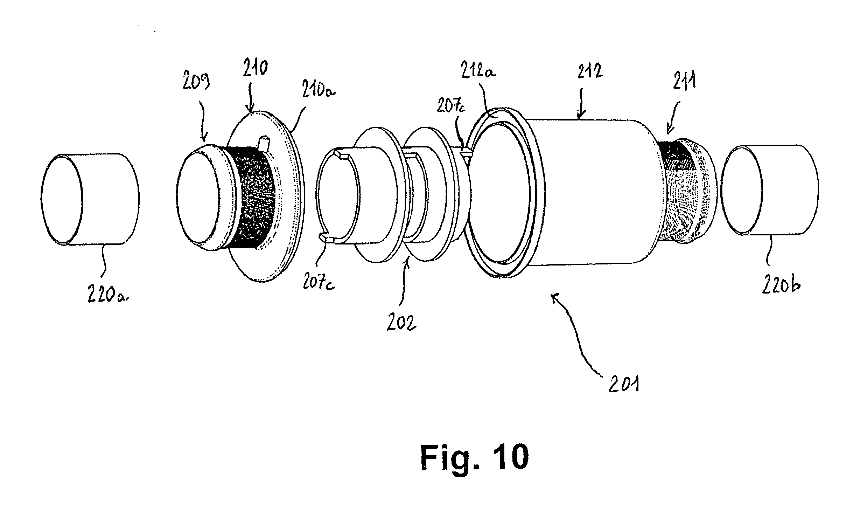

Le dispositif d'atténuation 201 selon la seconde variante illustrée aux figures 6 à 10 se distingue essentiellement de celui des figures 3 à 5, en ce qu'il définit non pas deux mais trois chambres de résonance annulaires respectivement centrale 203 et d'extrémité 204a et 204b autour de portions cylindriques correspondantes 206, 207 et 207' du conduit interne 202. Comme visible notamment aux figures 7 à 9, deux collerettes 208a et 208b sont formées coaxialement sur le conduit 202, entre lesquelles s'étend dans cet exemple la portion centrale 206 munie de deux fentes hémicirculaires 206a communiquant avec la chambre 203. Quant aux portions d'extrémité 207 et 207', elles s'étendent continûment à partir des collerettes 208a et 208b et se terminent chacune par deux pattes axiales 207c diamétralement opposées montées en butée contre l'épaulement interne 213, 216 correspondant de l'embout 209, 211 (voir figure 8), par l'intermédiaire du soudage par friction circulaire du bord 210a de la bride 210 avec le rebord 212a du manchon 212 en l'interface de soudure 214. On a par ailleurs représenté à la figure 10 deux douilles de raccordement 220a et 220b à insérer respectivement dans les embouts 209 et 211.

En conclusion, on notera que les dispositifs d'atténuation selon l'invention permettent de contrôler précisément la géométrie et les volumes respectifs des chambres de résonance créées suite à la soudure de l'enveloppe, et donc de maîtriser d'une manière satisfaisante l'atténuation recherchée en minimisant les dispersions acoustiques.

## Revendications

1. Dispositif d'atténuation acoustique (1, 101, 201) pour une ligne d'admission d'un moteur thermique à combustion interne, tel qu'un moteur turbocompressé pour véhicule automobile, ce dispositif étant destiné à être parcouru par un fluide gazeux sous pression et comportant :
- une enveloppe tubulaire (5) radialement extérieure comportant deux embouts d'entrée et de sortie (9 et 11, 109 et 111, 209 et 211) pour le fluide qui se terminent respectivement par deux élargissements périphériques (10 et 12) soudés l'un sur l'autre en formant un renflement circonférentiel pour le dispositif, et
- une structure de conduite radialement interne à l'enveloppe comportant un conduit (2, 102, 202) qui est monté axialement entre ces deux élargissements et qui délimite avec l'enveloppe au moins deux chambres annulaires de résonance (3 et 4, 103 et 104, 203, 204a et 204b) par l'intermédiaire d'au moins une collerette radiale (8, 108, 208a et 208b) s'étendant à partir du conduit,
**caractérisé en ce que** le conduit est monté en butée axiale à l'intérieur de l'enveloppe en venant buter contre un épaulement interne (13, 16, 113, 116, 213, 216) de l'un au moins des embouts, épaulement à partir duquel s'étend ledit élargissement, le ou chaque épaulement étant conçu pour caler axialement une extrémité correspondante (2a, 2b) du conduit de sorte à minimiser en fonctionnement les vibrations de ce dernier contre l'enveloppe.

2. Dispositif d'atténuation (1, 101, 201) selon la revendication 1, **caractérisé en ce que** l'intérieur du conduit (2, 102, 202) communique directement avec chacune desdites chambres de résonance (3 et 4, 103 et 104, 203, 204a et 204b) par des évidements qui sont formés dans ce conduit de part et d'autre de ladite ou de chaque collerette (8, 108, 208a et 208b) et qui sont par exemple des fentes (7a, 107a) et/ou lumières (6a, 106a, 206a) en arc de cercle.

3. Dispositif d'atténuation (1, 101, 201) selon la revendication 1 ou 2, **caractérisé en ce que** ladite ou chaque collerette (8, 108, 208 et 208b) est formée d'un seul tenant avec le conduit (2, 102, 202) et est montée au contact dudit renflement de l'enveloppe (5) sans en être solidaire, de telle sorte que ce conduit soit mobile en rotation à l'intérieur de cette enveloppe pour y être positionné angulairement.

4. Dispositif d'atténuation selon une des revendications précédentes, **caractérisé en ce que** le conduit (2) a l'une de ses extrémités (2b) solidaire de l'un des embouts (9) et son autre extrémité (2a) montée en butée axiale contre ledit épaulement (13) de l'autre embout (11), ce dispositif étant avantageusement constitué de deux pièces séparées respectivement formées par ces embouts.

5. Dispositif d'atténuation (1, 101, 201) selon une des revendications 1 à 3, **caractérisé en ce que** le conduit (2, 102, 202) a ses deux extrémités (2a et 2b) qui sont respectivement montées en butée dans lesdits épaulements (13 et 16, 113 et 116, 213 et 216) des embouts (9 et 11, 109 et 111, 209 et 211), ce dispositif étant avantageusement constitué de trois pièces séparées respectivement formées par ce conduit et ces embouts.

6. Dispositif d'atténuation (1, 101, 201) selon une des revendications précédentes, **caractérisé en ce que** le conduit (2, 102, 202) et les embouts (9 et 11, 109 et 111, 209 et 211) sont réalisés en au moins une matière plastique, de préférence en un matériau thermoplastique rigide moulé par injection, lesdits élargissements respectifs des embouts étant soudés en une interface de soudure (14, 114, 214) par friction circulaire.

7. Dispositif d'atténuation (1, 101, 201) selon la revendication 6, **caractérisé en ce que** ladite interface de soudure (14, 114, 214) est localisée en une extrémité dudit renflement qui définit une zone radialement la plus externe pour le dispositif et qui est axialement décalée par rapport à ladite ou chaque collerette (8, 108, 208a et 208b).

8. Dispositif d'atténuation (1, 101, 201) selon la revendication 7, **caractérisé en ce que** l'un des embouts (9, 109, 209) a son élargissement en forme de bride (10, 110, 210) dont la face axialement interne se termine par un bord (10a, 110a, 210a) convergeant radialement vers l'intérieur, l'autre embout (11, 111, 211) ayant son élargissement en forme de manchon (12, 112, 212) dont un rebord axialement interne (12a, 112a, 212a) diverge radialement vers l'extérieur et est soudé sur ce bord.

9. Dispositif d'atténuation (1, 101, 201) selon la revendication 8, **caractérisé en ce que** ladite interface de soudure (14, 114, 214) est sensiblement tronconique en convergeant radialement et axialement vers l'intérieur de l'enveloppe (5), et **en ce que** l'épaisseur radiale dudit rebord (12a, 112a, 212a) d'embout (11, 111, 211) décroît à mesure que ce rebord diverge.

10. Dispositif d'atténuation (1, 101) selon une des revendications précédentes, **caractérisé en ce qu'**une unique collerette (8, 108) est formée sur le conduit (2, 102), cette collerette étant reliée à deux portions cylindriques (6 et 7, 106 et 107) du conduit définissant lesdites chambres (3 et 4, 103 et 104) par ses deux faces opposées, des pattes axiales (6b) reliant une face de la collerette à l'une de ces portions (6, 106) et assurant entre elles la communication de cette portion avec la chambre en regard (3, 103), l'autre portion (7, 107) s'étendant continûment à partir de la face opposée de la collerette en présentant des fentes (7a, 107a) et/ou lumières assurant la communication avec l'autre chambre (4, 104).

11. Dispositif d'atténuation (201) selon une des revendications 1 à 9, **caractérisé en ce qu'**au moins deux collerettes (208a et 208b) sont formées coaxialement sur le conduit (202), au moins une portion cylindrique médiane (206) qui s'étend entre ces collerettes présentant des évidements par exemple en forme de fentes et/ou lumières (206a) en arc de cercle assurant la communication avec la chambre en regard (203), ce conduit présentant deux portions d'extrémité (207 et 207') s'étendant continûment à partir de ces collerettes et se terminant par des pattes axiales (207c) montées en butée contre lesdits épaulements (213 et 216) des deux embouts (209 et 211).

12. Dispositif d'atténuation (1, 101, 201) selon une des revendications précédentes, **caractérisé en ce qu'**il est dépourvu de soudure entre la structure de conduite et l'enveloppe (5).

13. Ligne d'admission d'un moteur thermique à combustion interne, tel qu'un moteur turbocompressé pour véhicule automobile, **caractérisée en ce qu'**elle comporte au moins un dispositif d'atténuation acoustique (1, 101, 201) selon une des revendications précédentes.

## Claims

1. Acoustic attenuation device (1, 101, 201) for an admission line of an internal combustion engine, such as a turbo-charged engine for automobile vehicles, this device being designed to have a pressurised gas flow through it and including:
- a radially exterior tubular casing (5) having inlet and outlet terminations (9 and 11, 109 and 111, 209 and 211) for the fluid that terminate at respective peripheral enlargements (10 and 12) welded together by forming a circumferential enlargement for the device, and
- a pipe structure radially inside the casing including a pipe (2, 102, 202) that is mounted axially between these two enlargements and which delimits with the casing at least two annular resonance chambers (3 and 4, 103 and 104, 203, 204a and 204b) by means of at least one radial flange (8, 108, 208a and 208b) extending from the pipe,
**characterised in that** the pipe is mounted so as to be axially abutted inside the casing against an internal shoulder (13, 16, 113, 116, 213, 216) of at least one of the terminations, from which shoulder said enlargement extends, the or each shoulder being designed to lock axially a corresponding end (2a, 2b) of the pipe so as in operation to minimise vibration of the latter against the casing.

2. Attenuation device (1, 101, 201) according to claim 1, **characterised in that** the interior of the pipe (2, 102, 202) communicates directly with each of said resonance chambers (3 and 4, 103 and 104, 203, 204a and 204b) via orifices that are formed in this pipe on either side of said or each flange (8, 108, 208a and 208b) and which are for example slots (7a, 107a) and/or openings (6a, 106a, 206a) of circular arc shape.

3. Attenuation device (1, 101, 201) according to claim 1 or 2, **characterised in that** said or each flange (8, 108, 208a and 208b) is formed in one piece with the pipe (2, 102, 202) and is mounted in contact with said enlargement of the casing (5) without being fastened thereto, so that this pipe is mobile in rotation inside this casing to be positioned angularly therein.

4. Attenuation device according to any one of the preceding claims, **characterised in that** the pipe (2) has one of its ends (2b) fastened to one of the terminations (9) and its other end (2a) mounted so as to abut axially against said shoulder (13) of the other termination (11), this device advantageously consisting of two separate parts respectively formed by these terminations.

5. Attenuation device (1, 101, 201) according to any one of claims 1 to 3, **characterised in that** the pipe (2, 102, 202) has its two ends (2a and 2b) mounted so as to abut in said shoulders (13 and 16, 113 and 116, 213 and 216) of the terminations (9 and 11, 109 and 111, 209 and 211), respectively, this device advantageously consisting of three separate parts respectively formed by this pipe and these terminations.

6. Attenuation device (1, 101, 201) according to any one of the preceding claims, **characterised in that** the pipe (2, 102, 202) and the terminations (9 and 11, 109 and 111, 209 and 211) are produced in at least one plastic material, preferably an injection-moulded rigid thermoplastic material, said respective enlargements of the terminations being circular friction welded at a welding interface (14, 114, 214).

7. Attenuation device (1, 101, 201) according to claim 6, **characterised in that** said welding interface (14, 114, 214) is localised at one end of said enlargement that defines a radially outermost area for the device and that is axially offset relative to said or each flange (8, 108, 208a and 208b).

8. Attenuation device (1, 101, 201) according to claim 7, **characterised in that** one of the terminations (9, 109, 209) has its enlargement in the form of a flange portion (10, 110, 210) the axially internal face whereof terminates at an edge (10a, 110a, 210a) converging radially inward, the other termination (11, 111, 211) having its enlargement in the form of a sleeve (12, 112, 212) an axially internal rim (12a, 112a, 212a) whereof diverges radially outward and is welded to this edge.

9. Attenuation device (1, 101, 201) according to claim 8, **characterised in that** said welding interface (14, 114, 214) is substantially frustoconical and converges radially and axially toward the interior of the casing (5) and **in that** the radial thickness of said rim (12a, 112a, 212a) of the termination (11, 111, 211) decreases as that rim diverges.

10. Attenuation device (1, 101, 201) according to any one of the preceding claims, **characterised in that** a single flange (8, 108) is formed on the pipe (2, 102), this flange being connected to two cylindrical portions (6 and 7, 106 and 107) of the pipe defining said chambers (3 and 4, 103 and 104) by its two opposite faces, axial lugs (6b) connecting one face of the flange to one of the portions (6, 106) and providing between them communication of this portion with the facing chamber (3, 103), the other portion (7, 107) extending continuously from the opposite face of the flange and including slots (7a, 107a) and/or openings providing communication with the other chamber (4, 104).

11. Attenuation device (201) according to any one of claims 1 to 9, **characterised in that** at least two flanges (208a and 208b) are formed coaxially on the pipe (202), at least one cylindrical median portion (206) that extends between these flanges having orifices, for example in the form of slots and/or openings (206a) of circular arc shape, providing communication with the facing chamber (203), this pipe having two end portions (207 and 207') extending continuously from these flanges and ending in axial lugs (207c) mounted so as to abut against said shoulders (213 and 216) of the two terminations (209 and 211).

12. Attenuation device (1, 101, 201) according to any one of the preceding claims, **characterised in that** it is free of welds between the pipe structure and the casing (5).

13. Admission line of an internal combustion engine, such as a turbo-charged engine for automobile vehicles, **characterised in that** it includes at least one acoustic attenuation device (1, 101, 201) according to any one of the preceding claims.

## Patentansprüche

1. Vorrichtung (1, 101, 201) zur akustischen Dämpfung für eine Einlassleitung eines Verbrennungsmotors, wie etwa eines turboaufgeladenen Motors für ein Kraftfahrzeug, wobei diese Vorrichtung dazu vorgesehen ist, von einem unter Druck stehenden gasförmigen Fluid durchströmt zu werden und Folgendes aufweist:
- eine radial äußere rohrförmige Hülle (5) mit zwei Endstücken (9 und 11, 109 und 111, 209 und 211) für den Einlass und Auslass des Fluids, die jeweils in zwei umlaufende erweiterte Abschnitte (10 und 12) enden, die aneinander geschweißt sind und dabei eine Umfangsverdickung für die Vorrichtung bilden, und
- eine zur Hülle radial innere Leitungsstruktur mit einer Leitung (2, 102, 202), die axial zwischen diesen beiden erweiterten Abschnitten angebracht ist und zusammen mit der Hülle über mindestens einen radialen Kragen (8, 108, 208a und 208b), der sich ausgehend von der Leitung erstreckt, mindestens zwei ringförmige Resonanzkammern (3 und 4, 103 und 104, 203, 204a und 204b) begrenzt,
**dadurch gekennzeichnet, dass** die Leitung axial in Anschlag im Inneren der Hülle angebracht ist und dabei in Anschlag an einen Innenabsatz (13, 16, 113, 116, 213, 216) mindestens eines der Endstücke gelangt, wobei sich der erweiterte Abschnitt ausgehend von dem Absatz erstreckt und der oder jeder Absatz so auslegt ist, dass er ein entsprechendes Ende (2a, 2b) der Leitung axial so klemmt, dass im Betrieb die Vibrationen der Leitung gegen die Hülle minimiert sind.

2. Dämpfungsvorrichtung (1, 101, 201) nach Anspruch 1, **dadurch gekennzeichnet, dass** das Innere der Leitung (2, 102, 202) über Ausnehmungen, die in dieser Leitung auf der einen und auf der anderen Seite des Kragens oder jedes Kragens (8, 108, 208a und 208b) gebildet sind und beispielsweise Spalte (7a, 107a) und/oder kreisbogenförmige Öffnungen (6a, 106a, 206a) sind, direkt mit jeder Resonanzkammer (3 und 4, 103 und 104, 203, 204a und 204b) verbunden ist.

3. Dämpfungsvorrichtung (1, 101, 201) nach Anspruch 1 oder 2, **dadurch gekennzeichnet, dass** der oder jeder Kragen (8, 108, 208a und 208b) einstückig mit der Leitung (2, 102, 202) ausgebildet und in Kontakt mit der Verdickung der Hülle (5) angebracht ist, ohne mit dieser fest verbunden zu sein, so dass diese Leitung innerhalb dieser Hülle drehbar ist, um winkelmäßig darin positioniert zu werden.

4. Dämpfungsvorrichtung nach einem der vorhergehenden Ansprüche, **dadurch gekennzeichnet, dass** eines der Enden (2b) der Leitung (2) mit einem der Endstücke (9) fest verbunden ist und das andere Ende (2a) axial in Anschlag am Absatz (13) des anderen Endstücks (11) angebracht ist, wobei diese Vorrichtung vorteilhaft aus zwei getrennten Teilen besteht, die jeweils durch diese Endstücke gebildet sind.

5. Dämpfungsvorrichtung (1, 101, 201) nach einem der Ansprüche 1 bis 3, **dadurch gekennzeichnet, dass** die beiden Enden (2a und 2b) der Leitung (2, 102, 202) jeweils in Anschlag in den Absätzen (13 und 16, 113 und 116, 213 und 216) der Endstücke (9 und 11, 109 und 111, 209 und 211) angebracht sind, wobei diese Vorrichtung vorteilhaft aus drei getrennten Teilen besteht, die jeweils durch diese Leitung und diese Endstücke gebildet sind.

6. Dämpfungsvorrichtung (1, 101, 201) nach einem der vorhergehenden Ansprüche, **dadurch gekennzeichnet, dass** die Leitung (2, 102, 202) und die Endstücke (9 und 11, 109 und 111, 209 und 211) aus mindestens einem Kunststoff, vorzugsweise aus einem spritzgegossenen, starren, thermoplastischen Material bestehen, wobei die entsprechenden erweiterten Abschnitte der Endstücke durch Kreisreibung zu einer Schweißschnittstelle (14, 114, 214) geschweißt sind.

7. Dämpfungsvorrichtung (1, 101, 201) nach Anspruch 6, **dadurch gekennzeichnet, dass** die Schweißschnittstelle (14, 114, 214) an einem Ende der Verdickung angeordnet ist, das einen radial äußersten Bereich für die Vorrichtung definiert und in Bezug auf den oder jeden Kragen (8, 108, 208a und 208b) axial versetzt ist.

8. Dämpfungsvorrichtung (1, 101, 201) nach Anspruch 7, **dadurch gekennzeichnet, dass** der erweiterte Abschnitt eines der Endstücke (9, 109, 209) die Form eines Bügels (10, 110, 210) hat, dessen axial innere Fläche in einen Rand (10a, 110a, 210a) endet, der radial nach innen zusammenläuft, wobei der erweiterte Abschnitt des anderen Endstücks (11, 111, 211) die Form einer Hülse (12, 112, 212) hat, deren axial innerer Rand (12a, 112a, 212a) radial nach außen auseinanderläuft und an diesen Rand geschweißt ist.

9. Dämpfungsvorrichtung (1, 101, 201) nach Anspruch 8, **dadurch gekennzeichnet, dass** die Schweißschnittstelle (14, 114, 214) im Wesentlichen kegelstumpfartig ist, indem sie radial und axial zum Inneren der Hülle (5) zusammenläuft, und die radiale Dicke des Rands (12a, 112a, 212a) des Endstücks (11, 111, 211) mit Zunahme des Auseinanderlaufens dieses Rands abnimmt.

10. Dämpfungsvorrichtung (1, 101) nach einem der vorhergehenden Ansprüche, **dadurch gekennzeichnet, dass** ein einziger Kragen (8, 108) an der Leitung (2, 102) ausgebildet ist, wobei dieser Kragen mit zwei zylindrischen Abschnitten (6 und 7, 106 und 107) der Leitung verbunden ist und über seine beiden entgegengesetzten Flächen die Kammern (3 und 4, 103 und 104) begrenzt, wobei axiale Laschen (6b) eine Fläche des Kragens mit einem dieser Abschnitte (6, 106) verbinden und zwischen ihnen die Verbindung dieses Abschnitts mit der gegenüberliegenden Kammer (3, 103) gewährleisten, wobei sich der andere Abschnitt (7, 107) kontinuierlich ausgehend von der entgegensetzten Fläche des Kragens erstreckt und dabei Spalte (7a, 107a) und/oder Öffnungen aufweist, die die Verbindung mit der anderen Kammer (4, 104) gewährleisten.

11. Dämpfungsvorrichtung (201) nach einem der Ansprüche 1 bis 9, **dadurch gekennzeichnet, dass** mindestens zwei Kragen (208a und 208b) koaxial an der Leitung (202) ausgebildet sind, wobei mindestens ein zylindrischer Mittelabschnitt (206), der sich zwischen diesen Kragen erstreckt, Ausnehmungen beispielsweise in Form von Spalten und/oder kreisbogenförmigen Öffnungen (206a) aufweist, die die Verbindung mit der gegenüberliegenden Kammer (203) gewährleisten, wobei diese Leitung zwei Endabschnitte (207 und 207') aufweist, die sich kontinuierlich ausgehend von diesen Kragen erstrecken und in axiale Laschen (207c) enden, die in Anschlag an die Absätze (213 und 216) der beiden Endstücke (209 und 211) angebracht sind.

12. Dämpfungsvorrichtung (1, 101, 201) nach einem der vorhergehenden Ansprüche, **dadurch gekennzeichnet, dass** sie keine Schweißnaht zwischen der Leitungsstruktur und der Hülle (5) aufweist.

13. Einlassleitung eines Verbrennungsmotors, wie etwa eines turboaufgeladenen Motors für ein Kraftfahrzeug, **dadurch gekennzeichnet, dass** sie mindestens eine Vorrichtung (1, 101, 201) zur akustischen Dämpfung nach einem der vorhergehenden Ansprüche aufweist.
